# EUROPÄISCHE PATENTSCHRIFT

(11) **EP 2 921 273 B1**
(45) Veröffentlichungstag und Bekanntmachung des Hinweises auf die Patenterteilung: **16.10.2019**
(21) Anmeldenummer: 15158884.5
(22) Anmeldetag: 12.03.2015
(51) Int. Cl.: F26B 5/16, F26B 23/00, B29B 13/06, B29B 9/16, B01D 53/26, B01D 59/40

(54) **VERFAHREN UND VORRICHTUNG ZUM TROCKNEN VON KUNSTSTOFFGRANULAT**
METHOD AND DEVICE FOR DRYING POLYMERIC GRANULES
PROCÉDÉ ET DISPOSITIF DESTINÉS AU SÉCHAGE DE GRANULES POLYMÈRES

(30) Priorität: 19.03.2014 DE 102014103772
(43) Veröffentlichungstag der Anmeldung: 23.09.2015
(73) Patentinhaber: SIMAR GmbH, 71665 Vaihingen/Enz (DE)
(72) Erfinder: Weinert, Harald, 75443 Oetisheim (DE)
(74) Vertreter: Fleck, Hermann-Josef

(56) Entgegenhaltungen:
- EP-A1- 0 626 244
- EP-A2- 0 061 161
- WO-A1-85/01569
- DE-A1- 3 145 921
- DE-A1- 4 234 696
- DE-A1- 4 437 494
- DE-B3-102010 049 487
- US-A- 4 601 114
- US-A- 5 546 673

## Beschreibung

Die Erfindung bezieht sich auf ein Verfahren zum Trocknen von Kunststoffen mittels in einem Kreislauf geführter Prozessluft mit einem Trockengutbehälter und einer Lufttrocknungsvorrichtung, die mindestens zwei in Kammern befindliche Festbettadsorber aufweist, welche während einer Regenerationsphase gleichzeitig von Prozessluft durchströmt werden und im Wechsel zueinander zum einen von aus dem Trockengutbehälter zugeführter, feuchtigkeitsbeladener Rückluft und zum anderen von trockener Regenerationsluft beaufschlagt werden, wobei die Regenerationsphase eine anfängliche Warmluftregenerationsphase und eine anschließende Kühlphase umfasst. Ferner bezieht sich die Erfindung auf eine Vorrichtung zur Durchführung eines solchen Verfahrens.

Ein bekanntes Verfahren zum Trocknen von Kunststoffen, wie z. B. bei den von der Anmelderin stammenden Granulattrocknungsanlagen KTX 50 und KTX 1200, verwendet einen oder mehrere Trockengutbehälter und eine Lufttrocknungsvorrichtung. Die in der Lufttrocknungsvorrichtung erzeugte trockene Prozessluft durchströmt den im Trockengutbehälter gelagerten Kunststoff und entzieht diesem Feuchtigkeit. Die feuchtigkeitsbeladene Rückluft aus dem Trockengutbehälter wird zur Lufttrocknungsvorrichtung zurückgeleitet. Dort adsorbiert ein Trockenmittel, welches in den benannten Anlagen als Festbettadsorber eingebracht ist, die Feuchtigkeit und bereitet somit die Prozessluft wieder auf. Das Trockenmittel kann alternativ auch als Adsorptionsrad ausgeführt sein. Da die Wasseraufnahmekapazität des Trockenmittels begrenzt ist, muss dieses regeneriert werden. Bei Festbettadsorbern wird dabei in regelmäßigen Zeitabschnitten in einer Regenerationsphase die Feuchtigkeit mittels heißer Regenerationsluft ausgetrieben und der Festbettadsorber anschließend mit unbeheizter Luft gekühlt. Um auch während der Regenerationsphase einen kontinuierlichen Betrieb zu gewährleisten, sind zwei Festbettadsorber parallel angeordnet, so dass während der Regenerationsphase des einen der andere die Prozesslufttrocknung bewerkstelligt. Ein kontinuierlicher Kunststofftrocknungsbetrieb unter Einsatz zweier Festbettadsorber setzt voraus, dass die Zeitspanne der Regenerationsphase kürzer ausfällt als die Zeitspanne der Adsorptionsphase.

Bei dem bekannten Verfahren wird die für die Regenerationsphase trockene Luft aus dem Prozessluftstrom abgegriffen und nach Durchströmen des zu regenerierenden Festbettadsorbers an die Umgebung abgegeben. Um das strömungstechnische Gleichgewicht zu erhalten, muss die abgegebene Luftmenge dem System wieder zugeführt werden, was durch Frischluftansaugung geschieht. Die zugeführte Frischluft bringt ihrerseits Feuchtigkeit in das System ein, die zusätzlich zu der Feuchtigkeit des Trockenguts durch die Lufttrockner aus der Prozessluft entfernt werden muss. So erhöht sich die für den Trocknungsprozess nötige Energiemenge. Weiterhin wird die für die Feuchtigkeit des Trockenguts zur Verfügung stehende Wasseraufnahme- bzw. Adsorptionskapazität des Lufttrockners teilweise durch die feuchte Frischluft beansprucht.

In der US 4 601 114 A ist ein Verfahren bzw. eine Vorrichtung zur Trocknung von Kunststoffen unter Verwendung zweier Trockengutbehälter angegeben, wobei sich jeweils einer der Behälter im Adsorptionsbetrieb, der andere im Regenerationsbetrieb befindet. Der Regenerationsbetrieb umfasst eine anfängliche Warmluftphase und eine anschließende Kühlphase. In der Warmluftphase wird dem zu regenerierenden Behälter separate Frischluft zugeführt, wobei der Zweig des Kreislaufes, in dem sich der zu regenerierende Behälter befindet, von dem Gesamtkreislauf entkoppelt und als separater, offener Kreislauf mit Frischluft geführt wird. Der Gesamtkreislauf verbleibt in einer geschlossenen Umluftführung. Für die anschließende Kühlphase wird die Frischluftzufuhr geschlossen und es wird auf eine Umluftführung umgeschaltet, in die dann auch der zu regenerierende Behälter eingebunden ist. Die Kühlluft wird aus dem gesamten Prozessluftstrom vor dessen Trocknung entnommen. Zweck der Umschaltung auf Umluftbetrieb ist es, eine Feuchtigkeitszufuhr aus der Atmosphäre während dieser Phase zu verhindern.

Die EP 0 626 244 A1 zeigt ein Verfahren und eine Vorrichtung zum Trocknen von in einem Trocknungstrichter befindlichem Kunststoffgranulat mittels Trockenluft und zum Aufbereiten eines Feuchte aus der Abluft aufnehmenden Adsorptionsmittels, welches zunächst durch aufgeheizte Außenluft von Feuchte befreit wird, und bei dem sich dann eine Kühlphase anschließt. Die Regenerationsluft während der Warmluftphase und auch die Luft während der Kühlphase wird separat von der den Trocknungstrichter durchströmenden Trockenluft geführt, sodass nicht beide Trockentöpfe von der Trockenluft durchströmt werden. Während der Kühlphase wird dabei die dem regenerierten Trockentopf entzogene Wärme an einen Wärmespeicher abgegeben.

Die WO 85/01569 A1 gibt ebenfalls ein Verfahren zum Trocknen von Kunststoffen an, wobei die Regeneration in einem separaten Kreislauf abläuft.

Aus der US 5 546 673 A ist ein Verfahren und eine Vorrichtung zum Trocknen von Kunststoffen bekannt, bei dem mindestens drei bewegte Kammern und getrennte Kreisläufe mit Festbettadsorbern für die beschriebene Prozessführung benötigt werden. Während eine Kammer Trockenluft bereitstellt, befinden sich die beiden anderen Kammern im Regenerationsbetrieb, und zwar die eine im Kühlluftregenerationsbetrieb, in dem sie teilweise in den Trocknungsprozesskreislauf eingebunden ist, und die andere in der Warmluftregenerationsphase, in der sie an einen separaten Frischluftkreislauf angeschlossen ist. Die drei Kammern werden in einem rotierenden Betrieb zwischen einer Trocknungsprozessphase, einer Kaltluftregernationsphase und einer Warmluftregenerationsphase umplatziert. Dies erfordert einen relativ aufwändigen Aufbau mit dem Rotationsmechanismus und den getrennten Kreisläufen und eine entsprechend aufwändige Betriebsweise.

Die DE 10 2010 049 487 B3 zeigt ein weiteres Verfahren bzw. eine weitere Vorrichtung zum Trocknen von Kunststoffen mit Trockengutbehälter und Lufttrocknungsvorrichtung. Dabei ist ebenfalls eine rotierende Anordnung mindestens dreier Kammern mit Festbettadsorbern vorhanden, wobei wechselweise eine der Kammern in einen separaten Frischluftkreislauf eingebunden wird, so dass auch hierbei ein entsprechender Aufwand erforderlich ist.

In einem Vortrag von Dr. Ralf Schmidt ("Wärme- und Kältespeicherung mittels Zeolith", Veranstaltung "Thermische Energiespeicher für Wärme und Kälte", IHK Akademie München; Forum; 06.März 2013) ist die Verwendung von Zeolithen als Trocknungsmittel gezeigt.

In der DE 39 36 008 C2 ist ein Verfahren und eine Vorrichtung zum Trocknen von Gut, insbesondere von Kunststoff, offenbart, bei dem das in einem Behältnis befindliche Gut von im Kreislauf geführter Trockenluft durchströmt wird. In diesem Verfahren wird eine Trocknungseinrichtung zum Trocknen der mit Feuchtigkeit beladenen Trockenluft verwendet, welche mindestens eine Trockenpatrone aufweist, deren Regeneration jedoch nicht genauer dargelegt ist. Insbesondere macht sie keine näheren Angaben zur Verwendung von trockener Prozessluft für die Regeneration der Trockenpatrone.

Weitere Verfahren oder Vorrichtungen zum Trocknen von Kunststoffen sind in der DE 42 41 568 A1, DE 43 00 595 A1, EP 0 061 161 A2, DE 31 45 921 A1 und der DE 44 37 494 A1 gezeigt.

Der vorliegenden Erfindung liegt die Aufgabe zugrunde, ein energieeffizientes und möglichst einfaches Verfahren zum Trocknen von Kunststoffen mittels im Kreislauf geführter Prozessluft sowie eine möglichst einfache Vorrichtung zur Durchführung eines solchen Verfahrens bereitzustellen.

Diese Aufgabe wird beim Verfahren mit den Merkmalen des Anspruches 1 und bei der Vorrichtung mit den Merkmalen des Anspruches 7 gelöst.

Bei dem erfindungsgemässen Verfahren ist vorgesehen, dass während einer Regenerationsphase beim Übergang von einer Warmluftregenerationsphase auf eine Kühlphase von einer Frischluftzufuhr, bei der dem Kreislauf von außen Frischluft zugeführt wird, auf eine Umluftführung in dem dann geschlossenen Kreislauf umgeschaltet wird, bei der die aus einer betreffenden Kammer austretende Kühlluft innerhalb des Kreislaufs wieder zugeführt wird. Bei der Vorrichtung ist vorgesehen, dass in dem Kreislauf eine von einer Steuerungseinrichtung ansprechbare Zusatz-Ventileinheit angeordnet ist, mit welcher während der Regenerationsphase beim Übergang von der Warmluftregenerationsphase auf die Kühlphase von einer Frischluftzufuhr, bei der dem Kreislauf von außen Frischluft zuführbar ist, umschaltbar ist auf eine Umluftführung in dem dann geschlossenen Kreislauf, bei der die aus der betreffenden Kammer austretende Kühlluft innerhalb des Kreislaufs wieder zuführbar ist.

Mit diesen Maßnahmen erfordert der Aufbau bei effizienter Prozessführung relativ wenig Aufwand, wobei der Kreislauf mit einer einfachen Leitungsanordnung und relativ einfachen Steuerungsgliedern versehen ist.

Eine erfindungsgemässe Maßnahme besteht darin, dass während der Umluftführung die aus der betreffenden Kammer austretende Kühlluft über eine Zusatz-Strömungsleitung dem Kreislauf zwischen dem Trockengutbehälter und den Festbettadsorbern wieder zugeführt wird.

Verschiedene Ausgestaltungsmöglichkeiten des erfindungsgemässen Verfahrens ergeben sich dadurch, dass die Umschaltung mittels einer Zusatz-Ventileinheit, die eine elektrisch betätigbare Zusatz-Ventileinheit oder pneumatisch betätigbare Zusatz-Ventileinheit sein kann, vorgenommen wird.

Zu einer vorteilhaften Betriebsweise trägt bei, dass die Strömung der Prozessluft mittels eines Regenerationsgebläses unterstützt wird.

Eine vorteilhafte Funktion ergibt sich ferner dadurch, dass die Regenerationsluft in einem Regenerationszweig vor der betreffenden Kammer während der Warmluftregenerationsphase mittels einer elektrischen Regenerationsheizvorrichtung angewärmt wird.

Die Maßnahmen, dass ein Adsorptionsmittel mit einer Porengröße p von p ≥ 0,5 nm und/oder mit einer hexagonalen Kristallstruktur und/oder mit einer maximalen Wasseraufnahmekapazität k von k ≥ 21 Gew.-% verwendet wird, und dass die Regenerationsphase in Betrieb gesetzt wird, wenn die aufgenommene Wassermenge mehr als 21 Gew.-% überschreitet, tragen zu einer effizienten Trocknung und Regeneration bei.

Verschiedene Ausgestaltungsvarianten der erfindungsgemässen Vorrichtung bestehen darin, dass sich die Kammern in einem oder mehreren Behältnissen befinden. Ein vorteilhafter Aufbau wird dadurch erhalten, dass während der Umluftführung die aus der betreffenden Kammer austretende Kühlluft über eine Zusatz-Strömungsleitung dem Kreislauf zwischen dem Trockengutbehälter und den Festbettadsorbern wieder zuführbar ist.

Bevorzugt ist, dass die Umschaltung mittels einer elektrisch betätigten Zusatz-Ventileinheit oder pneumatisch betätigten Zusatz-Ventileinheit vornehmbar ist.

Ferner wirkt sich vorteilhaft aus, dass die Strömung der Prozessluft mittels mindestens eines Regenerationsgebläses unterstützbar ist.

Für die Befreiung der Prozessluft von Partikeln ist es von Vorteil, dass in der Rückluftleitung mindestens ein Filter angeordnet ist.

Die Verwendung eines Adsorptionsmittels mit einer Porengröße p von p ≥ 0,5 nm und/oder einer hexagonalen Kristallstruktur und/oder einer maximalen Wasseraufnahmekapazität k von k > 21 Gew.-% unterstützt die effiziente Trocknung und Regeneration.

Ein weiteres vorteilhaftes Ausgestaltungsmerkmal der erfindungsgemässen Vorrichtung liegt darin, dass bzgl. der Strömungsrichtung der Regenerationsluft in einem Leitungsabschnitt vor den Kammern mindestens eine Regenerationsheizvorrichtung angeordnet ist, die mittels der Steuerungseinrichtung während der Warmluftregenerationsphase in Heizbetrieb setzbar ist.

Nachfolgend wird die Erfindung anhand von Ausführungsbeispielen unter Bezugnahme auf die Zeichnungen näher erläutert. Es zeigen:
- Fig. 1: eine schematische Darstellung einer Vorrichtung bzw. ein Fließschema eines Verfahrens zum Trocknen von Kunststoffen mit einem Trockengutbehälter, einem Kreislauf für Prozessluft und einer Lufttrocknungsvorrichtung, wobei sich eine Zusatz-Ventileinheit einer Ventilvorrichtung in Frischluftzufuhrstellung befindet,
- Fig. 2: ein weiteres Ausführungsbeispiel der Vorrichtung bzw. des Verfahrens zum Trocknen von Kunststoffen nach Fig. 1, wobei sich die ZusatzVentileinheit in Umluftführungsstellung befindet,
- Fig. 3: ein weiteres Ausführungsbeispiel der Vorrichtung bzw. des Verfahrens zum Trocknen von Kunststoffen mit einer gegenüber Fig. 1 unterschiedlichen Ventilvorrichtung, wobei sich eine Zusatz-Ventileinheit der Ventilvorrichtung in Frischluftzufuhrstellung befindet,
- Fig. 4: Ausführungsbeispiel nach Fig. 3, wobei sich die Zusatz-Ventileinheit in Umluftführungsstellung befindet,
- Fig. 5: ein weiteres Ausführungsbeispiel der Vorrichtung bzw. des Verfahrens zum Trocknen von Kunststoffen, wobei im Unterschied zu Fig. 3 lediglich eine Regenerationsheizvorrichtung im Kreislauf angeordnet ist, die über eine Regenerations-Ventilvorrichtung einem in der Regenerationsphase befindlichen Festbettadsorber zugeschaltet ist und
- Fig. 6: Ausführungsbeispiel nach Fig. 5, wobei sich die Zusatz-Ventileinheit in Umluftführungsstellung befindet.

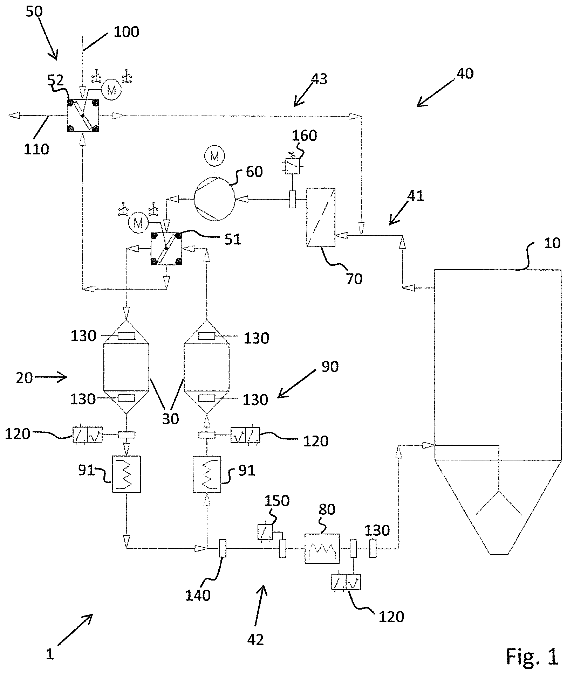

Fig. 1 zeigt eine Vorrichtung 1 zum Trocknen von Kunststoffen mit einer Lufttrocknungsvorrichtung und einem Trockengutbehälter zur Aufnahme von Kunststoffen, insbesondere in Granulatform, angeordnet in einem Prozessluft führenden Kreislauf 40. Mittels der Vorrichtung 1 kann ein Verfahren zum Trocknen von Kunststoffen durchgeführt werden, wobei mehrere Trockengutbehälter vorhanden sein können. Fig. 1 zeigt auch ein Fließschema des Verfahrens.

Die Prozessluft, welche in dem Fig. 1 gezeigten Kreislauf 40 geführt ist, durchströmt den Trockengutbehälter 10 und wird anschließend zur Trocknung der Lufttrocknungsvorrichtung 20 zugeführt. Die aus der Lufttrocknungsvorrichtung 20 strömende trockene Prozessluft gelangt über eine Trockenluftleitung 42 des Kreislaufs 40 erneut in den Trockengutbehälter 10. In der Trockenluftleitung 42 ist zum Aufheizen der Prozessluft eine Adsorptionsvorheizvorrichtung 80 angeordnet. Diese erwärmt die Prozessluft auf die kunststoffspezifische Trockenlufttemperatur. Zweckmäßig sind in der Trockenluftleitung 42 Vorrichtungen zur Überwachung angeordnet, in vorliegendem Beispiel stromauf der Adsorptionsheizung 80 ein Taupunkttransmitter 140 und ein Strömungswächter 150, sowie ein Thermostat 120 und ein Temperaturfühler 130 stromab der Adsorptionsheizung 80. Diese erlauben eine Überwachung während des Betriebes, an die gegebenenfalls Steuerungsmaßnahmen gekoppelt sind. So können beispielsweise in Abhängigkeit des Taupunktes Umschaltvorgänge durch eine Ventilvorrichtung 50 mittels einer Steuerungseinrichtung erfolgen.

Über die Trockenluftleitung 42 gelangt die Prozessluft in den Trockengutbehälter 10, wo sie den gelagerten Kunststoff durchströmt und diesem dabei Feuchtigkeit entzieht. Anschließend gelangt sie, nun als feuchtigkeitsbeladene Rückluft, über eine Rückluftleitung 41 in die Lufttrocknungsvorrichtung 20, wobei sie in vorliegendem Ausführungsbeispiel von einem in der Rückluftleitung 41 befindlichen Gebläse 60 angesaugt wird. Stromauf des Gebläses 60 passiert die feuchtigkeitsbeladene Rückluft einen Filter 70, der sich vorteilhafterweise an dieser Position befindet, um die Rückluft von Staubanteilen zu befreien. Stromab des Filters 70 ist zweckmäßig ein Drucksensor 160 angeordnet, um den Filter zu überwachen und gegebenenfalls Maßnahmen zur Filterregeneration einzuleiten.

Die feuchtigkeitsbeladene Rückluft wird über eine Rückluft-Ventileinheit 51 einer Ventilvorrichtung 50 in die Lufttrocknungsvorrichtung 20 geleitet. In vorliegendem Beispiel sind die Ventileinheiten der Ventilvorrichtung 50 für elektrischen Betrieb ausgeführt. Die in Fig. 1 dargestellte Lufttrocknungsvorrichtung 20 weist zwei parallel angeordnete Kammern 30 auf, die jeweils einen Festbettadsorber enthalten. Denkbar wäre ebenfalls eine Anordnung mit mehr als zwei Kammern 30, beispielsweise um eine Kammer in Reserve zu halten. Die Kammern können in mehreren separaten oder in einem gemeinsamen Gehäuse enthalten sein.

Über die figurgemäße Stellung der Rückluft-Ventileinheit 51 gelangt die Prozessluft innerhalb der Lufttrocknungsvorrichtung 20 in die linke der Kammern 30, welche sich in der Adsorptionsphase befindet. In der alternativen Ventilstellung gelangt die Prozessluft in die rechte der Kammern 30, in der dann die Adsorption abläuft. Die Umstellung der Rückluft-Ventileinheit 51 erfolgt zweckmäßig automatisiert beispielsweise über eine taupunktabhängige oder zeitabhängige Steuerung.

Die aus der Kammer 30 austretende getrocknete Prozessluft durchströmt zunächst eine während der Adsorptionsphase nicht zu diesem Zweck betriebene Regenerationsheizvorrichtung 91 und einen Thermostat 120. Möglich wäre, dass die Regenerationsheizvorrichtung 91 während der Adsorptionsphase anstelle oder zusätzlich zu der Adsorptionsheizvorrichtung 80 betrieben wird, beispielsweise bei einer Störung der Adsorptionsheizvorrichtung 80. Eine weitere Ausführungsvariante wäre ein Bypass, welcher die Regenerationsheizvorrichtung 91 und den Thermostat 120 während der Adsorptionsphase umgeht. Anschließend wird die trockene Prozessluft wieder der Trockenluftleitung 42 zugeführt.

Parallel zur linken Kammer 30 ist die rechte Kammer 30 angeordnet, die sich bei dem in Fig. 1 dargestellten Zustand in einer Warmluftregenerationsphase befindet, die einen Teil einer Regenerationsphase bildet. In der Regenerationsphase durchströmt trockene Regenerationsluft einen Regenerationszweig 90, welcher die Regenerationsheizvorrichtung 91, einen Thermostat 120 und die rechte Kammer 30 umfasst. Neben dem Thermostat 120 können weitere oder andere Überwachungsvorrichtungen vorgesehen sein. Die trockene Regenerationsluft wird dem Prozessluftstrom aus der Trockenluftleitung 42 entnommen, stromauf der Adsorptionsheizvorrichtung 80. Die trockene Regenerationsluft passiert zunächst die Regenerationsheizvorrichtung 91, wo sie auf die für die Warmluftregenerationsphase benötigte Temperatur angewärmt wird.

Nach Durchströmen der rechten Kammer 30, wo die Regenerationsluft die Feuchtigkeit aus dem Festbettadsorber austreibt, wird die mit Feuchtigkeit beladene Regenerationsluft über die Rückluft-Ventileinheit 51 in eine dem Kreislauf 40 angegliederte Zusatz-Strömungsleitung 43 geleitet. Eine in der Zusatz-Strömungsleitung 43 angeordnete Zusatz-Ventileinheit 52 der Ventilvorrichtung 50 führt sie über einen Abluftauslass 110 aus dem Kreislauf 40 an die Umgebung ab. Der abgeleitete Teil des Prozessluftstroms wird über die Zusatz-Ventileinheit 52 mit Frischluft ersetzt, um das strömungstechnische Gleichgewicht aufrecht zu erhalten. In dieser Frischluftzufuhrstellung ist somit der Kreislauf 40 geöffnet. Die Zusatz-Ventileinheit 52 bildet in dieser Stellung eine Strömungsverbindung zu dem Abluftauslass 110 und von der Frischluftzufuhr 100 zu der Zusatz-Strömungsleitung 43. Die Frischluft wird über die Zusatz-Strömungsleitung 43 der Prozessluft in der Rückluftleitung stromauf des Filters 70 zugeführt. Diese Zuführstellung ist zweckmäßig, da so eventuell über die Frischluft eingebrachte Staubpartikel über den Filter abgeschieden werden. Zudem wird die über die Frischluft in die Prozessluft eingebrachte Feuchtigkeit über die Lufttrocknungsvorrichtung 20 abgeschieden, bevor die Prozessluft in den Trockengutbehälter 10 gelangt.

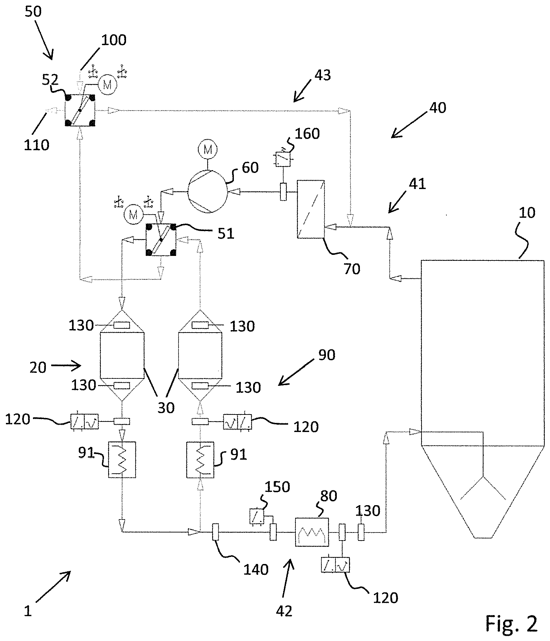

Fig. 2 unterscheidet sich von Fig. 1 insoweit, als sie die beschriebene Regenerationsphase in einer nach der Warmluftregenerationsphase einsetzenden Kühlphase zeigt. In der Kühlphase befindet sich die Regenerationsheizvorrichtung 91 nicht im Heizbetrieb, so dass die durch den Regenerationszweig 90 geführte trockene Regenerationsluft nicht durch die Regenerationsheizvorrichtung 91 beheizt wird. Die trockene Regenerationsluft durchströmt die rechte Kammer 30 und kühlt den darin befindlichen Festbettadsorber. Anschließend wird sie über die Rückluft-Ventileinheit 51 in die dem Kreislauf 40 angegliederte Zusatz-Strömungsleitung 43 geleitet. Die in der Zusatz-Strömungsleitung 43 befindliche Zusatz-Ventileinheit 52 befindet sich dabei in Umluftführungsstellung, in welcher sie den Abluftauslass 110 und die Frischluftzufuhr 100 schließt. Die Regenerationsluft wird über die Zusatz-Strömungsleitung 43 weitergeführt und der Prozessluft an deren Anschlussstelle an der Rückluftleitung 41 wieder zugeführt. So ergibt sich eine Umluftführung in geschlossenem Kreislauf 40.

Vorteilhaft wirkt sich hierbei aus, dass in der Kühlphase keine zusätzliche Feuchtigkeit über von außen zugeführte Frischluft in den Kreislauf 40 gelangt und entfernt werden müsste, wodurch die Energieeffizienz des Gesamt-Prozesses verbessert wird.

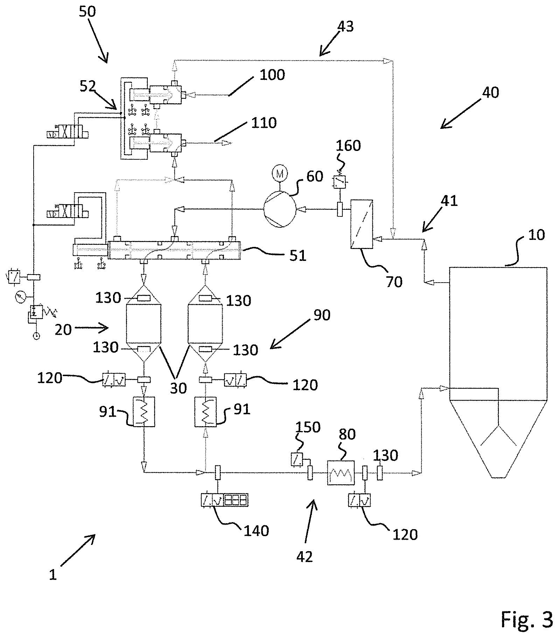

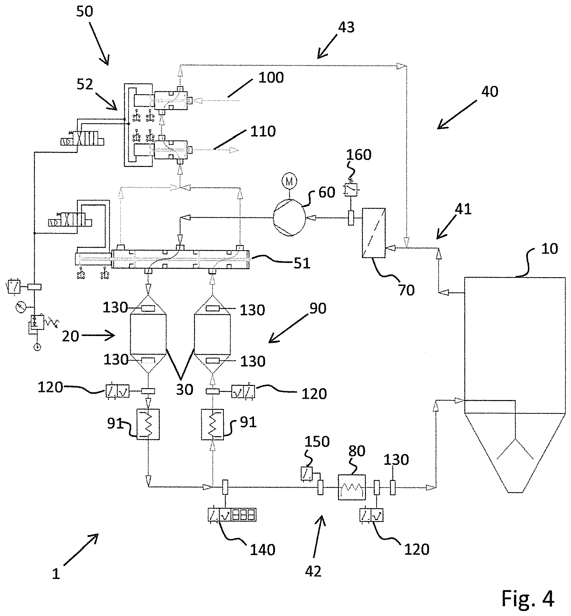

Ein weiteres Ausführungsbeispiel zeigen Fig. 3 bzw. 4, die im Wesentlichen Fig. 1 bzw. 2 entsprechen, mit dem Unterschied, dass die Rückluft-Ventileinheit 51 und Zusatz-Ventileinheit 52 der Ventilvorrichtung 50 anders aufgebaut und pneumatisch betätigbar sind. Möglich ist auch eine Kombination aus pneumatisch und elektrisch betätigbaren Ventilen.

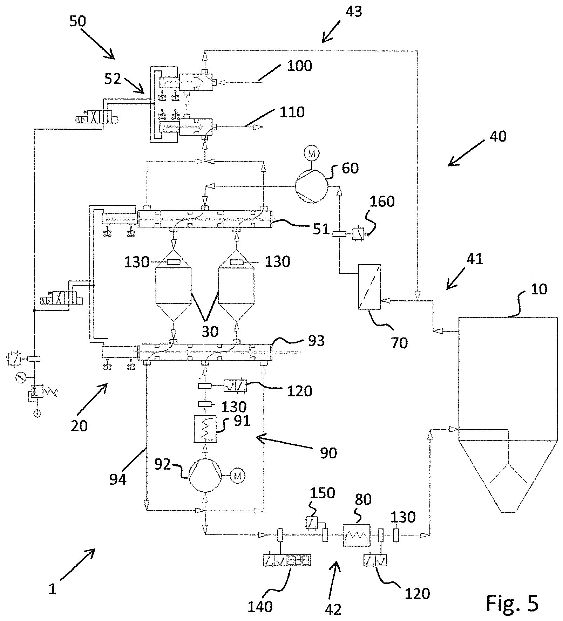

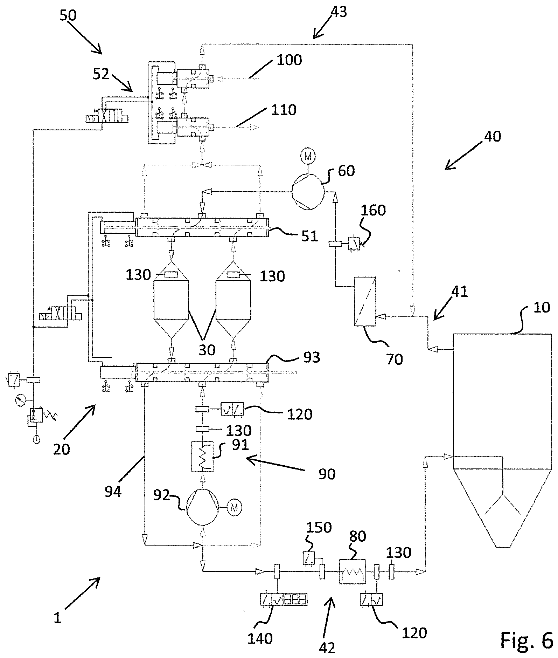

Einer Ausgestaltungsvariante gemäß Fig. 5 bzw. Fig. 6, die ansonsten im Wesentlichen den Ausführungsbeispielen nach Fig. 3 und 4 entspricht, weist eine Regenerationsheizvorrichtung 91 mit einem zusätzlich vorgeschalteten Regenerationsgebläse 92 auf. In Fig. 5 befindet sich das System in der Warmluftregenerationsphase, während Fig. 6 die Kühlphase zeigt. Über eine zusätzliche Regenerations-Ventilvorrichtung 93 sind ein Abschnitt des Regenerationszweigs 90, welcher das Regenerationsgebläse 92, die Regenerationsheizvorrichtung 91 und gegebenenfalls Vorrichtungen zur Überwachung aufweist, mit der in der Regenerationsphase befindlichen rechten Kammer 30 gekoppelt. Die aus der in der Adsorptionsphase befindlichen linken Kammer 30 strömende, getrocknete Prozessluft wird durch die Regenerations-Ventilvorrichtung 93 über einen Bypass 94 geleitet und über eine Zweigstelle zum Teil über den Abschnitt des Regenerationszweigs 90 und zum Teil in die Trockenluftleitung 42 geführt.

In den Ausführungsbeispielen sind im Kreislauf 40 zweckmäßig Vorrichtungen zur Überwachung angeordnet. Solche sind Taupunkttransmitter 140, Strömungswächter 150, Thermostate 120, Drucksensoren 160 und/oder Temperaturfühler 130. Diese erlauben eine Überwachung während des Betriebes, an die gegebenenfalls Steuerungsmaßnahmen gekoppelt sein können. So können beispielsweise in Abhängigkeit des Taupunktes Umschaltvorgänge durch die Ventilvorrichtung 50 mittels einer Steuerungseinrichtung erfolgen.

Die in den vorstehend beschriebenen Ausführungsbeispielen enthaltene Luftführung mittels der Ventilvorrichtung 50 ergibt wesentliche Vorteile für die Energieeinsparung. Vorteilhaft in diesem Zusammenhang ist auch die Verwendung eines speziellen Adsorbermittels als Festbettadsorber mit einer hexagonalen Struktur und mit einer Porengröße p von p ≥ 0,5 nm. Die hexagonale Struktur und eine Porengröße p von p ≥ 0,5 nm führen zu einer erhöhten Wasseraufnahmekapazität und verbesserten Massentransfereigenschaften verglichen mit bisher bei Kunststofftrocknern eingesetzten Adsorbermitteln. So steigert sich die Wasseraufnahmefähigkeit, die je Liter Trockenmittelbehälter zur Verfügung steht, auf über 21 Gew.-%, insbesondere auf 26-28 Gew.-%. Durch die höhere Wasseraufnahmekapazität wird die Adsorptionszeit bis zum Sättigungszeitpunkt verlängert. Gleichzeitig wird die Regenerationszeit verkürzt, da das gespeicherte Wasser aufgrund der höheren Porengröße p und der Hexagonalstruktur schneller entzogen werden kann. Dies wiederum ergibt eine erhöhte Energieeffizienz des Gesamt-Prozesses im Vergleich zu bisher verwendeten Adsorbermitteln. So ist ein Trockenmittel geeignet, das folgende Eigenschaften aufweist:
- Korngröße: 2,15 - 3,75 mm
- Schüttdichte: 0,641 kg/l
- Porengröße: 10A = 1 nm
- Maximale Wasseraufnahme: 27 Gew.-% => 173,07 g_{(wasser)} / Ltr._{(Vol.)}
- Soll-Regenerationstemperatur: 240°C bis 300°C
- Formel: Naₓ[(AlO₂)ₓ(SiO₂)]^{∗}zH₂O
- Kristallstruktur: hexagonal

In Kombinationen mit dem beschriebenen Aufbau wird eine besonders effiziente und dabei in der Steuerung bzw. Regelung günstige Prozessführung erreicht.

Der erfindungsgemäßen Einsatz der Ventilvorrichtung 50 in Zusammenhang mit dem speziellen Adsorbermittel erlaubt eine Verlängerung der Pausenzeiten zwischen den einzelnen Regenerationszyklen durch die Verlängerung der Adsorbtionszeiten. Das Ende der Adsobtionszeit wird von dem Taupunkt der Prozessluft bestimmt, der durch die beschriebene Ausbildung der Vorrichtung und des damit durchgeführten Verfahrens länger konstant gehalten werden kann als bei herkömmlichen Verfahren. Beispielsweise wird bei herkömmlichen Trocknungsverfahren in einem Taupunktbereich von -60°C bis -30°C getrocknet, d.h. die Verlängerung der Pausenzeit endet bei Erreichen eines Prozesslufttaupunktes von -30°C. Jedoch beginnt bereits spätestens im Anschluss an die Kühlphase eine Erhöhung der Taupunkttemperatur, d.h. eine "Verschlechterung" der Aufnahmekapazität. Bei dem vorstehend beschriebenen Verfahren jedoch liegt ein nahezu konstanter Taupunkt mit einer Taupunkttemperatur zwischen z.B. -60 und -70 °C auch lange nach der Kühlphase vor, beispielsweise über einen Zeitraum von bis zu 10 Stunden. So kann auch in der Pausenzeit nach der Kühlphase ein hoher Wirkungsgrad gewährleistet werden. Weiterhin könnte durch Akzeptanz einer feuchteren Prozessluft, mit einer höheren Taupunkttemperatur von z.B. bis zu -30 °C, die Adsorptionsphase, und somit die Pausenzeiten zwischen den Regenerationsphasen, verlängert werden, sodass eine noch größere Energieeinsparung erzielt werden kann.

## Patentansprüche

1. Verfahren, bei dem Kunststoffe mittels in einem Kreislauf (40) geführter Prozessluft getrocknet werden, mit einem Trockengutbehälter (10), der in dem die Prozessluft führenden Kreislauf (40) angeordnet ist und von der Prozessluft durchströmt wird, und mit einer Lufttrocknungsvorrichtung (20), die mindestens zwei in Kammern (30) befindliche Festbettadsorber aufweist, welche während einer Regenerationsphase gleichzeitig durchströmt werden und im Wechsel zueinander zum einen von aus dem Trockengutbehälter (10) zugeführter, feuchtigkeitsbeladener Rückluft und zum anderen von Regenerationsluft beaufschlagt werden, wobei die Regenerationsphase eine Warmluftregenerationsphase umfasst, an die sich eine Kühlphase anschließt, wobei beim Übergang von der Warmluftregenerationsphase auf die Kühlphase von einer Frischluftzufuhr (100), bei der von außen Frischluft zugeführt wird, mittels einer Zusatz-Ventileinheit (52) auf eine Umluftführung umgeschaltet wird, bei der die aus der betreffenden Kammer (30) austretende Kühlluft innerhalb des Kreislaufs (40) wieder zugeführt wird,
**dadurch gekennzeichnet,**
**dass** die Regenerationsphase im Anschluss an die anfängliche Warmluftregenerationsphase auch die anschließende Kühlphase umfasst,
**dass** während der Regenerationsphase auf eine Umluftführung in dem Kreislauf (40) umgeschaltet wird, wobei dann der Kreislauf (40) geschlossen ist und die mindestens zwei in den Kammern (30) befindlichen Festbettabsorber gleichzeitig von Prozessluft durchströmt werden und die Regenerationsluft als trockene Regenerationsluft dem Prozessluftstrom aus einer Trockenluftleitung (42), in der getrockente Prozessluft geführt wird, entnommen wird.

2. Verfahren nach Anspruch 1,
**dadurch gekennzeichnet,**
**dass** während der Umluftführung die aus der betreffenden Kammer (30) austretende Kühlluft über eine Zusatz-Strömungsleitung (43) dem Kreislauf (40) zwischen dem Trockengutbehälter (10) und den Festbettadsorbern wieder zugeführt wird.

3. Verfahren nach Anspruch 1 oder 2,
**dadurch gekennzeichnet,**
**dass** die Umschaltung mittels einer elektrisch betätigten Zusatz-Ventileinheit (52) oder pneumatisch betätigten Zusatz-Ventileinheit (52) vorgenommen wird.

4. Verfahren nach einem der vorhergehenden Ansprüche,
**dadurch gekennzeichnet,**
**dass** die Strömung der Prozessluft mittels eines Regenerationsgebläses (92) unterstützt wird.

5. Verfahren nach einem der vorhergehenden Ansprüche,
**dadurch gekennzeichnet,**
**dass** die Regenerationsluft in einem Regenerationszweig (90) vor der betreffenden Kammer (30) während der Warmluftregenerationsphase mittels einer elektrischen Regenerationsheizvorrichtung (91) angewärmt wird.

6. Verfahren nach einem der vorhergehenden Ansprüche,
**dadurch gekennzeichnet,**
**dass** ein Adsorptionsmittel mit einer Porengröße p von p ≥ 0,5 nm verwendet wird und/oder
**dass** ein Adsorptionsmittel mit einer hexagonalen Kristallstruktur verwendet wird und/oder
**dass** ein Adsorptionsmittel mit einer maximalen Wasseraufnahmekapazität k von k ≥ 21 Gew.-% verwendet wird, und
**dass** die Regenerationsphase in Betrieb gesetzt wird, wenn die aufgenommene Wassermenge mehr als 21 Gew.-% überschreitet.

7. Vorrichtung zum Trocknen von Kunststoffen, bei der Prozessluft in einem Kreislauf (40) geführt wird und ein Trockengutbehälter (10), der in dem die Prozessluft führenden Kreislauf (40) angeordnet ist und von der Prozessluft durchströmt ist, sowie eine Lufttrocknungsvorrichtung (20) vorhanden sind, die mindestens zwei in Kammern (30) befindliche Festbettadsorber aufweist, welche bei Betrieb während einer Regenerationsphase gleichzeitig durchströmt sind und im Wechsel zueinander zum einen von aus dem Trockengutbehälter (10) zugeführter, feuchtigkeitsbeladener Rückluft und zum anderen von Regenerationsluft beaufschlagt sind, wobei die Regenerationsphase eine Warmluftregenerationsphase umfasst, in der von außen Frischluft zugeführt ist und an die sich eine Kühlphase anschließt, wobei eine von einer Steuerungseinrichtung ansprechbare Zusatz-Ventileinheit (52) vorhanden ist, mit welcher beim Übergang von der Warmluftregenerationsphase auf die Kühlphase auf eine Umluftführung umschaltbar ist, bei der die aus der betreffenden Kammer (30) austretende Kühlluft innerhalb des Kreislaufs (40) wieder zuführbar ist.
**dadurch gekennzeichnet,**
**dass** die Regenerationsphase im Anschluss an die anfängliche Warmluftregenerationsphase auch die anschließende Kühlphase umfasst, dass die Zusatz-Ventileinheit (52) in dem Kreislauf (40) angeordnet ist und mittels der Zusatz-Ventileinheit (52) während der Regenerationsphase beim Übergang von der Warmluftregenerationsphase auf die Kühlphase von der Frischluftzufuhr (100), bei der dem Kreislauf (40) von außen Frischluft zugeführt ist, auf die Umluftführung umgeschaltet wird, wobei dann der Kreislauf (40) geschlossen ist und die mindestens zwei in den Kammern (30) befindlichen Festbettabsorber gleichzeitig von Prozessluft durchströmt sind und die Regene-rationsluft als trockene Regenerationsluft dem Prozessluftstrom aus einer Trockenluftleitung (42), in der getrocknete Prozessluft geführt ist, entnommen ist.

8. Vorrichtung nach Anspruch 7,
**dadurch gekennzeichnet,**
**dass** sich die Kammern (30) in einem oder mehreren Behältnissen befinden.

9. Vorrichtung nach Anspruch 7 oder 8,
**dadurch gekennzeichnet,**
**dass** während der Umluftführung die aus der betreffenden Kammer (30) austretende Kühlluft über eine Zusatz-Strömungsleitung (43) dem Kreislauf (40) zwischen dem Trockengutbehälter (10) und den Festbettadsorbern wieder zuführbar ist.

10. Vorrichtung nach einem der Ansprüche 7 bis 9,
**dadurch gekennzeichnet,**
**dass** die Umschaltung mittels einer elektrisch betätigten Zusatz-Ventileinheit (52) oder pneumatisch betätigten Zusatz-Ventileinheit (52) vornehmbar ist.

11. Vorrichtung nach einem der Ansprüche 7 bis 10,
**dadurch gekennzeichnet,**
**dass** die Strömung der Prozessluft mittels mindestens eines Regenerationsgebläses (92) unterstützbar ist.

12. Vorrichtung nach einem der Ansprüche 7 bis 11,
**dadurch gekennzeichnet,**
**dass** in der Rückluftleitung (41) mindestens ein Filter (70) angeordnet ist.

13. Vorrichtung nach einem der Ansprüche 7 bis 12,
**dadurch gekennzeichnet,**
**dass** ein Adsorptionsmittel mit einer Porengröße p von p ≥ 0,5 nm verwendet ist und/oder
**dass** ein Adsorptionsmittel mit einer hexagonalen Kristallstruktur verwendet ist und/oder
**dass** ein Adsorptionsmittel mit einer maximalen Wasseraufnahmekapazität k von k > 21 Gew.-% verwendet ist, und
**dass** die Regenerationsphase in Betrieb setzbar ist, wenn die aufgenommene Wassermenge mehr als 21 Gew.-% überschreitet.

14. Vorrichtung nach einem der Ansprüche 7 bis 13,
**dadurch gekennzeichnet,**
**dass** das verwendete Adsorptionsmittel der Formel Naₓ[(AlO₂)ₓ(SiO₂)]^{∗}zH₂O entspricht.

15. Vorrichtung nach einem der Ansprüche 7 bis 14,
**dadurch gekennzeichnet,**
**dass** bezüglich der Strömungsrichtung der Regenerationsluft in einem Leitungsabschnitt vor den Kammern (30) mindestens eine Regenerationsheizvorrichtung (91) angeordnet ist, die mittels der Steuerungseinrichtung während der Warmluftregenerationsphase in Heizbetrieb setzbar ist.

## Claims

1. Method in which plastics are dried by means of process air conveyed in a circuit (40), having a dry material container (10) which is arranged in the circuit (40) conveying the process air and through which the process air flows, and having an air drying device (20) which has at least two fixed bed adsorbers, which are located in chambers (30) and through which the flow passes simultaneously during a regeneration phase and which are supplied, alternately to one another, on the one hand with moisture-laden return air delivered from the dry material container (10) and on the other hand with regeneration air, the regeneration phase comprising a hot air regeneration phase, which is followed by a cooling phase, there being, at the transition from the hot air regeneration phase to the cooling phase, a changeover by means of an additional valve unit (52) from a fresh air supply (100), in which fresh air is delivered from outside, to a recirculation of air, in which the cooling air exiting from the relevant chamber (30) is delivered again within the circuit (40), **characterized in that** the regeneration phase following the initial hot air regeneration phase also includes the subsequent cooling phase, **in that** during the regeneration phase there is a changeover to a recirculation of air in the circuit (40), the circuit (40) then being closed and process air flowing simultaneously through the at least two fixed bed absorbers located in the chambers (30), and the regeneration air, as dry regeneration air, being extracted from the process air stream from a dry air line (42) in which dried process air is conveyed.

2. Method according to claim 1, **characterized in that**
during the recirculation of air, the cooling air exiting from the relevant chamber (30) is returned to the circuit (40) between the dry goods container (10) and the fixed bed adsorbers via an additional flow line (43).

3. Method according to claim 1 or 2, **characterized in that**
the changeover is performed by means of an electrically operated additional valve unit (52) or pneumatically operated additional valve unit (52).

4. Method according to any of the preceding claims, **characterized in that**
the flow of process air is assisted by means of a regeneration blower (92).

5. Method according to any of the preceding claims, **characterized in that**
the regeneration air is heated in a regeneration branch (90) upstream of the relevant chamber (30) during the hot air regeneration phase by means of an electrical regeneration heater (91).

6. Method according to any of the preceding claims, **characterized in that**
an adsorbent having a pore size p where p ≥ 0.5 nm is used and/or **in that** an adsorbent having a hexagonal crystal structure is used and/or **in that** an adsorbent having a maximum water absorption capacity k where k ≥ 21 wt.% is used, and **in that** the regeneration phase is set in operation when the amount of water absorbed exceeds 21 wt.%.

7. Device for drying plastics, in which process air is conveyed in a circuit (40) and a dry material container (10), which is arranged in the circuit (40) conveying the process air and through which the process air flows, and an air drying device (20) are provided, which air drying device has at least two fixed bed adsorbers which are located in chambers (30) and through which the flow passes simultaneously in operation during a regeneration phase and which are supplied, alternately to one another, on the one hand with moisture-laden return air delivered from the dry material container (10) and on the other hand with regeneration air, the regeneration phase comprising a hot air regeneration phase in which fresh air is delivered from the outside and which is followed by a cooling phase, an additional valve unit (52) being provided which can be controlled by a control device and by means of which, at the transition from the hot air regeneration phase to the cooling phase, there can be a changeover to a recirculation of air, in which the cooling air exiting from the relevant chamber (30) can be delivered again within the circuit (40), **characterized in that** the regeneration phase following the initial hot air regeneration phase also includes the subsequent cooling phase, **in that** the additional valve unit (52) is arranged in the circuit (40) and, by means of the additional valve unit (52), during the regeneration phase at the transition from the hot air regeneration phase to the cooling phase there is a changeover from a fresh air supply (100), in which fresh air is delivered from outside to the circuit (40), to the circulation of air, the circuit (40) then being closed and process air flowing simultaneously through the at least two fixed bed absorbers located in the chambers (30), and the regeneration air, as dry regeneration air, being extracted from the process air stream from a dry air line (42) in which dried process air is conveyed.

8. Device according to claim 7, **characterized in that**
the chambers (30) are located in one or more containers.

9. Device according to claim 7 or 8, **characterized in that**
during the recirculation of air, the cooling air exiting from the relevant chamber (30) can be returned to the circuit (40) between the dry goods container (10) and the fixed bed adsorbers via an additional flow line (43).

10. Device according to any of claims 7 to 9, **characterized in that**
the changeover can be performed by means of an electrically operated additional valve unit (52) or pneumatically operated additional valve unit (52).

11. Device according to any of claims 7 to 10, **characterized in that**
the flow of process air can be assisted by means of at least one regeneration blower (92).

12. Device according to any of claims 7 to 11, **characterized in that**
at least one filter (70) is arranged in the return air line (41).

13. Device according to any of claims 7 to 12, **characterized in that**
an adsorbent having a pore size p where p ≥ 0.5 nm is used and/or **in that** an adsorbent having a hexagonal crystal structure is used and/or **in that** an adsorbent having a maximum water absorption capacity k where k > 21 wt.% is used, and **in that** the regeneration phase can be set in operation when the amount of water absorbed exceeds 21 wt.%.

14. Device according to any of claims 7 to 13, **characterized in that**
the adsorbent used corresponds to the formula Naₓ[(AlO₂)ₓ(SiO₂)]^{∗}zH₂O.

15. Device according to any of claims 7 to 14, **characterized in that**
at least one regeneration heating device (91), which can be set in heating mode by means of the control device during the hot air regeneration phase, is arranged in a line portion upstream of the chambers (30) with respect to the flow direction of the regeneration air.

## Revendications

1. Procédé dans lequel des matières plastiques sont séchées au moyen d'air de traitement guidé dans un circuit (40), comportant un réservoir de matière sèche (10) disposé dans le circuit (40) guidant l'air de traitement et traversé par l'air de traitement, et comportant un dispositif de séchage à l'air (20) présentant au moins deux adsorbeurs à lit fixe situés dans des chambres (30), lesquels absorbeurs sont traversés simultanément pendant une phase de régénération, et sont sollicités, en alternance les uns par rapport aux autres, d'une part par l'air de retour chargé d'humidité acheminé à partir du réservoir de matière sèche (10), et d'autre part par l'air de régénération, la phase de régénération comprenant une phase de régénération d'air chaud suivie d'une phase de refroidissement, une commutation ayant lieu, au moyen d'une unité de soupape supplémentaire (52), lors du passage de la phase de régénération d'air chaud à la phase de refroidissement, d'une alimentation en air frais (100), dans laquelle de l'air frais est acheminé depuis l'extérieur, à une conduite d'air en circulation, conduite d'air dans laquelle l'air de refroidissement sortant de la chambre (30) concernée est à nouveau acheminé à l'intérieur du circuit (40), **caractérisé en ce que**, après la phase initiale de régénération d'air chaud, la phase de régénération comprend également une phase de refroidissement ultérieure, **en ce que**, pendant la phase de régénération, une commutation sur une conduite d'air en circulation dans le circuit (40) a lieu, le circuit (40) étant ensuite fermé et les au moins deux absorbeurs à lit fixe situés dans les chambres (30) étant simultanément traversés par l'air de traitement, et l'air de régénération étant prélevé sous forme d'air de régénération sec du flux d'air de traitement provenant d'une conduite d'air sec (42) dans laquelle l'air de traitement séché est conduit.

2. Procédé selon la revendication 1, **caractérisé en ce que**, pendant la conduite d'air en circulation, l'air de refroidissement sortant de la chambre (30) concernée est acheminé dans le circuit (40) entre le réservoir de matière sèche (10) et les adsorbeurs à lit fixe par une conduite d'écoulement supplémentaire (43).

3. Procédé selon la revendication 1 ou 2, **caractérisé en ce que** la commutation s'effectue au moyen d'une unité de soupape supplémentaire (52) à commande électrique ou d'une unité de soupape supplémentaire (52) à commande pneumatique.

4. Procédé selon l'une des revendications précédentes, **caractérisé en ce que** l'écoulement de l'air de traitement est pris en charge par un ventilateur de régénération (92).

5. Procédé selon l'une des revendications précédentes, **caractérisé en ce que** l'air de régénération est chauffé dans une branche de régénération (90) en amont de la chambre (30) concernée pendant la phase de régénération d'air chaud, au moyen d'un dispositif électrique de chauffage de régénération (91).

6. Procédé selon l'une des revendications précédentes, **caractérisé en ce qu'**un moyen d'adsorption présentant une taille de pores p de p ≥ 0,5 nm est utilisé et/ou **en ce qu'**un moyen d'adsorption ayant une structure cristalline hexagonale est utilisé et/ou **en ce qu'**un moyen d'adsorption ayant une capacité maximale d'absorption d'eau k de k ≥ 21 % en poids est utilisé, et **en ce que** la phase de régénération est mise en service lorsque la quantité d'eau absorbée dépasse 21 % en poids.

7. Dispositif pour le séchage de matières plastiques, dans lequel de l'air de traitement est guidé dans un circuit (40), et dans lequel sont prévus un réservoir de matière sèche (10) disposé dans le circuit (40) guidant l'air de traitement et traversé par l'air de traitement ainsi qu'un dispositif de séchage à l'air (20), lequel dispositif présente au moins deux adsorbeurs à lit fixe situés dans des chambres (30), lesquels adsorbeurs sont simultanément traversés lors de leur fonctionnement pendant une phase de régénération, et sont sollicités, en alternance les uns par rapport aux autres, d'une part par de l'air de retour chargé d'humidité acheminé à partir du réservoir de matière sèche (10), et d'autre part par de l'air de régénération, la phase de régénération comprenant une phase de régénération d'air chaud dans laquelle de l'air frais est acheminé depuis l'extérieur, et étant suivie d'une phase de refroidissement, une unité de soupape supplémentaire (52) sensible à un dispositif de commande étant prévue, unité au moyen laquelle une commutation vers une conduite d'air en circulation est possible lors du passage de la phase de régénération d'air chaud à la phase de refroidissement, conduite dans laquelle l'air de refroidissement sortant de la chambre (30) concernée peut être à nouveau acheminé à l'intérieur du circuit (40), **caractérisée en ce que** la phase de régénération suivant la phase initiale de régénération d'air chaud comprend également une phase de refroidissement ultérieure, **en ce que** l'unité de soupape supplémentaire (52) est disposée dans le circuit (40) et **en ce qu'**une commutation a lieu, au moyen de l'unité de soupape supplémentaire (52), pendant la phase de régénération lors du passage de la phase de régénération d'air chaud à la phase de refroidissement, de l'alimentation en air frais (100), dans laquelle de l'air frais est acheminé vers le circuit (40) depuis l'extérieur, à la conduite d'air en circulation, le circuit (40) étant ensuite fermé et les au moins deux absorbeurs à lit fixe situés dans les chambres (30) étant simultanément traversés par l'air de traitement, et l'air de régénération étant prélevé sous forme d'air de régénération sec du flux d'air de traitement provenant d'une conduite d'air sec (42) dans laquelle de l'air de traitement séché est conduit.

8. Procédé selon la revendication 7, **caractérisé en ce que** les chambres (30) se trouvent dans un ou plusieurs récipients.

9. Procédé selon la revendication 7 ou 8, **caractérisé en ce que**, pendant la conduite d'air en circulation, l'air de refroidissement sortant de la chambre (30) concernée peut être acheminé dans le circuit (40) entre le réservoir de matière sèche (10) et les adsorbeurs à lit fixe par une conduite d'écoulement supplémentaire (43).

10. Dispositif selon l'une des revendications 7 à 9, **caractérisé en ce que** la commutation peut s'effectuer au moyen d'une unité de soupape supplémentaire (52) à commande électrique ou d'une unité de soupape supplémentaire (52) à commande pneumatique.

11. Dispositif selon l'une des revendications 7 à 10, **caractérisé en ce que** l'écoulement de l'air de traitement peut être pris en charge par au moins un ventilateur de régénération (92).

12. Dispositif selon l'une des revendications 7 à 11, **caractérisé en ce qu'**au moins un filtre (70) est disposé dans la conduite de retour d'air (41).

13. Dispositif selon l'une des revendications 7 à 12, **caractérisé en ce qu'**un moyen d'adsorption présentant une taille de pores p de p ≥ 0,5 nm est utilisé et/ou **en ce qu'**un moyen d'adsorption ayant une structure cristalline hexagonale est utilisé et/ou **en ce qu'**un moyen d'adsorption ayant une capacité maximale d'absorption d'eau k de k > 21 % en poids est utilisé, et **en ce que** la phase de régénération peut être mise en service lorsque la quantité d'eau absorbée dépasse 21 % en poids.

14. Dispositif selon l'une des revendications 7 à 13, **caractérisé en ce que** le moyen d'adsorption utilisé correspond à la formule Naₓ[(AlO₂)ₓ(SiO₂)]^{∗}zH₂O.

15. Dispositif selon l'une des revendications 7 à 14, **caractérisé en ce qu'**au moins un dispositif de chauffage de régénération (91) est disposé par rapport au sens d'écoulement de l'air de régénération dans une section de conduite en amont des chambres (30), lequel dispositif de chauffage de régénération peut être mis en mode de chauffage au moyen du dispositif de commande pendant la phase de régénération d'air chaud.
